# FASCICULE DE BREVET EUROPEEN

(11) **EP 1 719 918 B1**
(45) Date de publication et mention de la délivrance du brevet: **06.01.2010**
(21) Numéro de dépôt: 04714335.9
(22) Date de dépôt: 25.02.2004
(51) Int. Cl.: F04D 29/18

(54) **ROTOR A STRUCTURE CIRCULAIRE CELLULAIRE TRAPEZOÏDALE**
ROTOR MIT EINER KREISFÖRMIGEN TRAPEZOIDEN STRUKTUR
ROTOR WITH A CIRCULAR TRAPEZOIDAL CELLULAR STRUCTURE

(43) Date de publication de la demande: 08.11.2006
(73) Titulaire: Sanchez Sanchez, Felix, E-50010 Zaragoza (ES)
(72) Inventeur: Sanchez Sanchez, Felix, E-50010 Zaragoza (ES)
(74) Mandataire: Manzano Cantos, Gregorio
(86) Numéro de dépôt international: PCT/ES2004/000087
(87) Numéro de publication internationale: WO 2005/085648

(56) Documents cités:
- EP-A1- 0 953 774
- US-A- 3 198 423
- US-A- 3 783 814
- US-A1- 2003 044 283

## Description

### OBJET DE L'INVENTION

L'objet de ce brevet d'invention comme l'indique son titre, rotor de structure circulaire cellulaire trapézoïdale, a pour fonction principale de remplacer les hélices conventionnelles par un rotor de structure circulaire cellulaire trapézoïdale, avec une amélioration substantielle de son rendement pour son utilisation en tant que rotor de tout genre d'aéronefs et d'engins volants, comme pour motopompes d'élévation et de transport de liquides, boues, solides, granulés, céréales ou substances gazeuses, rotors pour moteurs "hors-bord" et tout genre de bateaux, nefs ou embarcations en général, et pour une quelconque application d'usage hydraulique ou gazeux, comme ventilateurs ou aspirateurs. Il peut aussi être utilisé comme compresseur disposant pour cela de pièces hélicoïdales, lesquelles sont placées entre des cylindres tubulaires concentriques pour former des trapèzes hélicoïdaux, lesquels se trouvent à leur tour accouplés les uns sur les autres afin de former une structure circulaire cellulaire trapézoidale Les cylindres tubulaires concentriques ferment les périmètres extérieurs de l'ensemble dans sa totalité. Le plus grand des diamètres extérieurs est prolongé par une pièce en forme de tronc conique tubulaire pour contrôler et orienter la force centrifuge que les pièces hélicoïdales produisent à leur sortie, à cause des révolutions très élevées HH auxquelles sont soumis ces éléments mécaniques, raison pour laquelle toutes les ailes ou pales dont tous les éléments antérieurement cités disposent, disparaissent dans leur totalité; ce qui nous mène à l'origine fondamentale de ce brevet d' invention, à savoir, remplacer les ailes ou pales par des rotors de structure circulaire cellulaire trapézoïdale.

### ETAT DE LA TECHNIQUE

Dans la technique utilisée, nous faisons mentions des brevets suivants : US-A 3 198 423 ( F.H. CLUTE) "HELICOID FAN" considéré comme décrivant l'état de l'art antérieur le plus proche;
US-A 3 783 814 ( C.T.ZOVKO) "THRUST AUGMENTING EXPANSION ENGINE";
EP-A 1-0 953 774 (EATON CORP.) "FAN ASSEMBLY HAVING INCREASED FAN BLADE AREA" et US 2003 044 283 A1 ( NADEAU ET AL.) "LOW TONE AXIAL FAN STTRUCTURE".

La technique utilisée avec les hélices conventionnelles ainsi qu'avec tout genre d'aéronefs ou engins volants, est très simple et largement connue: il s'agit d'un noyau actionné par un moteur à très hautes révolutions; le noyau porte des ailes ou H pales accouplées de différentes manières, pouvant être même tournantes, très sophistiquées, avec les périmètres extérieurs complètement ouverts, ce qui produit une grande perte de presque toutes les forces centrifuges produites par les ailes ou pales, lesquelles se trouvent soumises à des révolutions extrêmement élevées.

En ce qui concerne les pompes d'élévation ou de transvasement de liquides, la technique utilisée varie en formes, pouvant être des rouets avec ailes ou pales, des disques circulaires avec pales ou nerfs saillants courbés à fonction centrifuge, mais profitant seulement d'une très petite partie de la force centrifuge produite par les ailes ou pales ou bien par les nerfs courbés saillants des noyaux des pompes, et des disques dans le reste des cas. Les périmètres extérieurs sont totalement fermés ce qui ne permet pas une exploitation maximale de la force centrifuge exercée sur la carcasse.

### DESCRIPTION DE L'INVENTION

Le rotor de structure circulaire cellulaire trapézoïdale pour rotors en général et moteurs "hors-bord", portera dans le cylindre tubulaire extérieur une prolongation en forme de tronc conique pour concentrer et diriger les forces centrifuges dans la sortie des liquides, boues ou granulés vers une seule direction, tandis que les pompes d'élévation et de transvasement de liquides uses, boues et granulés en général, sont formées d'un noyau rotor où sont fixées plusieurs pièces hélicoïdales, sur lesquelles sont installés des cylindres tubulaires qui à leur tour forment des trapèzes tubulaires hélicoïdaux, c'est ainsi que l'ensemble s'assemble en une structure circulaire cellulaire trapézoïdale. Les cylindres tubulaires ferment totalement les périmètres extérieurs des pièces hélicoïdales en formant avec les cylindres tubulaires, les trapèzes tubulaires hélicoïdaux, et de cette façon la plupart des forces centrifuges est bien utilisée, ce qui nous mène à l'origine de ce brevet d'invention, pour tout ceci, les pompes peuvent être utilisées aussi bien pour l'extraction de liquides et de boues à grande profondeur, comme pour l'élévation de liquides et de boues à des hauteurs précisant de grandes pressions, ou bien transvasement des liquides, boues et granulés, céréales, etc. à de grandes distances; en ce qui concerne les rotors ronds de structure circulaire cellulaire trapézoïdale, ils peuvent aussi être utilisés comme compresseur, la pression ira en dépendance de l'avancement ou pas hélicoïdal ainsi que des révolutions du rotor de structure circulaire cellulaire trapézoïdale; il peut aussi être utilisé comme extracteur ventilateur, l'avancement des pièces hélicoïdales étant déterminé dans les pompes par la profondeur et la hauteur.

Les rotors de structure circulaire cellulaire trapézoïdale ont d'autres applications très importantes en plus de celles antérieurement décrites, comme par exemple propulseur à jet d'air pour engins aériens, pouvant être un jet d'air de plus haute pression comme pour l'extraction de minéraux.

Lorsque le rotor de structure circulaire cellulaire trapézoïdale est utilisé comme hélice, il portera une pièce en forme de tronc conique pour concentrer et orienter la sortie des forces centrifuges et sera formé avec le même système fonctionnel que la pompe, comme par exemple, extracteur ventilateur, compresseur, propulsif de gaz et aussi comme élément propulsif pour tout genre d'embarcations afin de remplacer les hélices conventionnelles.

Les cylindres tubulaires peuvent être unitaires, binaires ou multiples; ils seront, par rapport au nombre des trapèzes hélicoïdaux, multipliés par trois ou plus selon le nombre de cylindres tubulaires que les rotors de structure circulaire cellulaire trapézoïdale portent généralement; en ce qui concerne la surface des pièces hélicoïdales qui forment avec les cylindres tubulaires de structure circulaire cellulaire trapézoïdale, l'addition de toutes les surfaces des pièces hélicoïdales sera au moins deux fois plus grande que la surface frontale du rotor; par contre la largeur du rotor de structure circulaire cellulaire trapézoïdale sera au moins 2% plus large que le diamètre extérieur maximum du cylindre tubulaire concentrique. Les trapèzes hélicoïdaux avec leurs pièces correspondantes qui forment l'ensemble rotor de structure circulaire cellulaire trapézoïdale pourront être assemblés en ligne ou hors ligne, c'est-à-dire, alignés ou non alignés entre eux.

Les pièces hélicoïdales des rotors de structure circulaire cellulaire trapézoïdale ont en général deux fonctions complètement opposées ce qui représente 50% du développement de la pièce, laquelle par sa forme hélicoïdale et son pas ou avancement, permet l'entrée de gaz ou de liquides, qui est aussi, lors de son usage comme pompe de structure circulaire cellulaire trapézoïdale, l'entrée de boues solides ou granulés. Les autres 50% de la pièce hélicoïdale se comportent comme un expulseur lequel exercera, grâce aux hautes révolutions, une grande pression extrêmement importante pour les rotors de structure circulaire cellulaire trapézoïdale en général, comme aussi pour les rotors de structure circulaire cellulaire trapézoïdale de moteur hors-bord, et suivant un comportement identique pour les compresseurs.

Les pompes et les rotors de structure circulaire cellulaire trapézoïdale pourront tourner dans les deux sens en changeant simplement la position des pièces hélicoïdales.

### DESCRIPTION DES DESSINS

Le dessin 1 comprend une vue frontale et sectionnée du rotor de structure circulaire cellulaire trapézoïdale lorsqu'il est utilisé comme propulseur d'air pour engins aériens, nous pouvons apprécier le cube ou noyau (les premières pièces hélicoïdales sont assemblées sur le diamètre extérieur ou noyau (1), lesquelles forment le diamètre du premier cylindre (2) pour continuer avec les cylindres tubulaires concentriques suivants (2), portant entre elles les pièces hélicoïdales (3), (dans le dessin nous avons représenté douze, neuf et six cylindres en commençant par celui ayant le plus grand diamètre, et en alternant antant que possible les pièces hélicoïdales d'un diamètre à un autre), le cylindre extérieur de plus grand diamètre a une prolongation en forme de tronc conique tubulaire (4), finalement et comme élargissement d'union entre les pièces et les diffèrents diamètres des cylindres tubulaires, nous voyons les détails "C", "D" et "E".

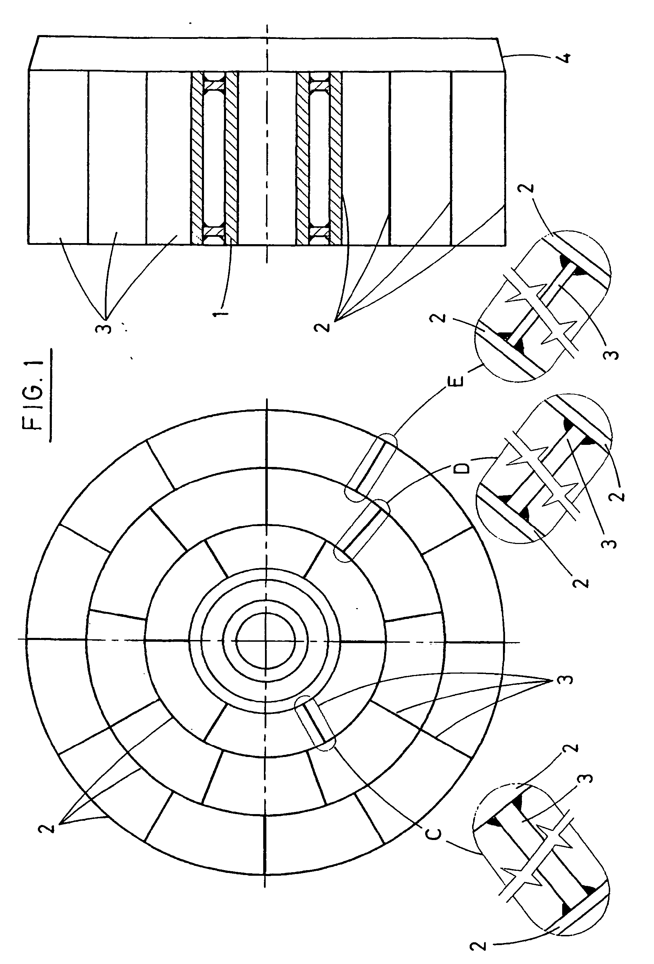

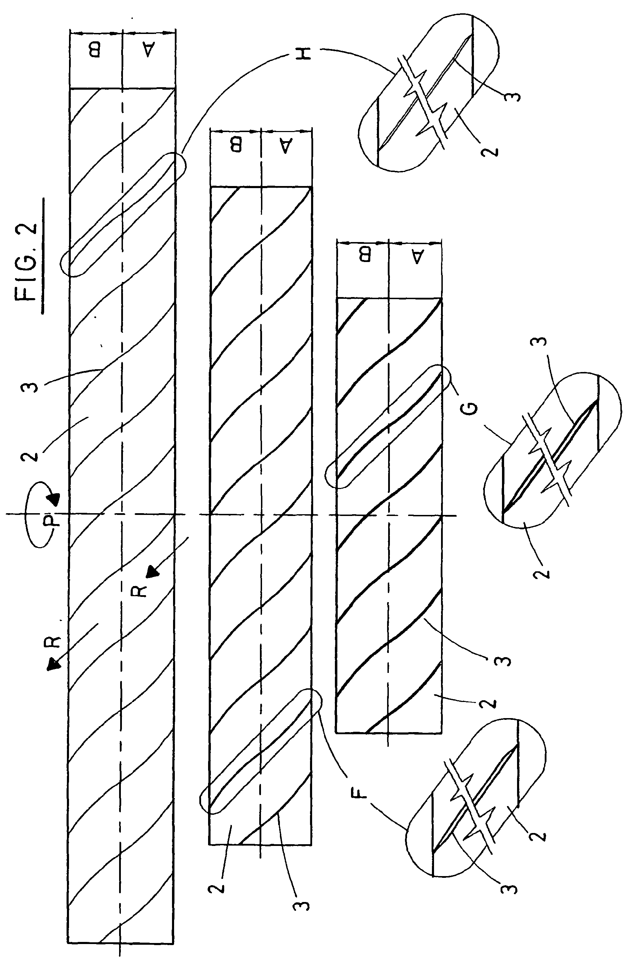

La figure 2 représente le développement des cylindres tubulaires (2), avec les pièces hélicoïdales développées (3), et disposant de 12, 9 et 6 éléments classés du plus grand au plus petit respectivement, qui forment les trapèzes tubulaires hélicoïdaux, où la cote A représente les 50% du développement, ce qui produit aussi l'entrée des gaz, laquelle peut être aussi l'entrée des substances solides quand le rotor est utilisé comme pompes de structure circulaire cellulaire trapézoïdale. Par contre, les autres 50% sont représentés dans la cote B, lorsqu'il est utilisé comme expulseur à cause de sa forme hélicoïdale inverse. Les flèches "R" indiquent la direction des gaz, "P" représente le mouvement de rotation et les détails "F", "G" et "H" nous permettent d'apprécier un agrandissement des pièces hélicoïdales.

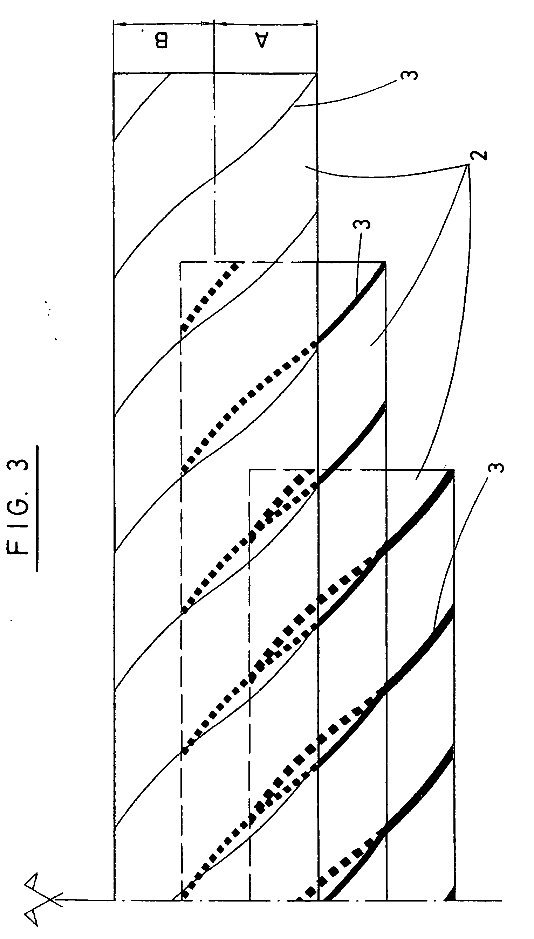

La figure 3 représente la moitié des développements des précédents dessins, interposés du plus grand au plus petit développement en 2/3 de largeur; les cylindres sont représentés par le numéro (2) et les pièces hélicoïdales par le (3).

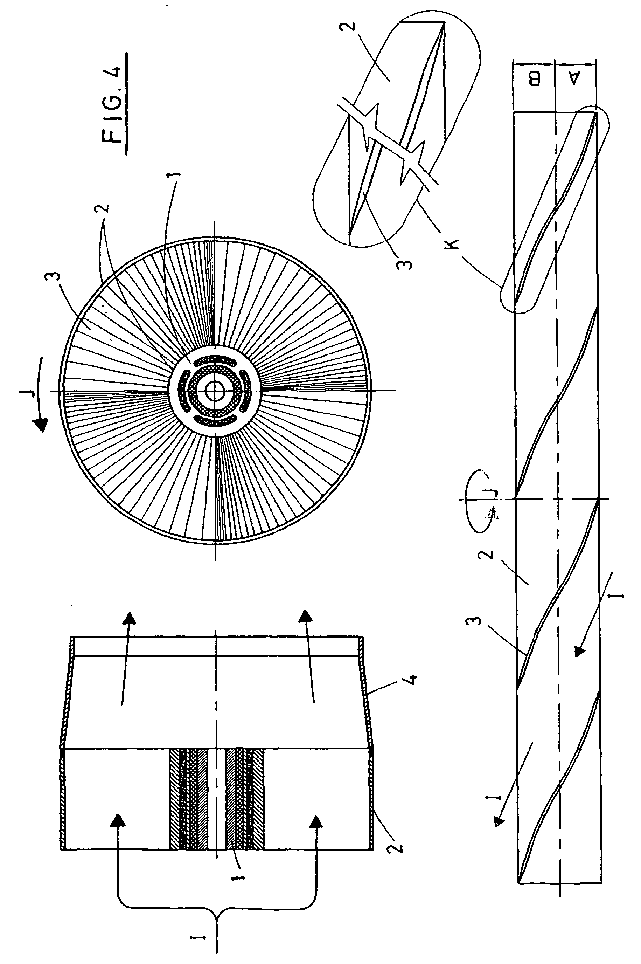

La figure 4 correspond à un rotor utilisé comme moteur "hors-bord", où nous observons une vue sectionnée ainsi que frontale de celui-ci; (1) représente le cube assemblé au moteur correspondant, le cylindre tubulaire (2) portant les quatre pièces hélicoïdales (3), suivi d'une prolongation en forme de tronc conique tubulaire (4). Nous pouvons aussi observer dans ce dessin le développement du cylindre tubulaire tout comme ses pièces hélicoïdales développées, où les flèches "I" indiquent l'accès d'entrée des liquides lorsque le sens de rotation est indiqué par la direction "J". Le détail agrandi de l'entrée des pièces hélicoïdales est représenté par la lettre "K".

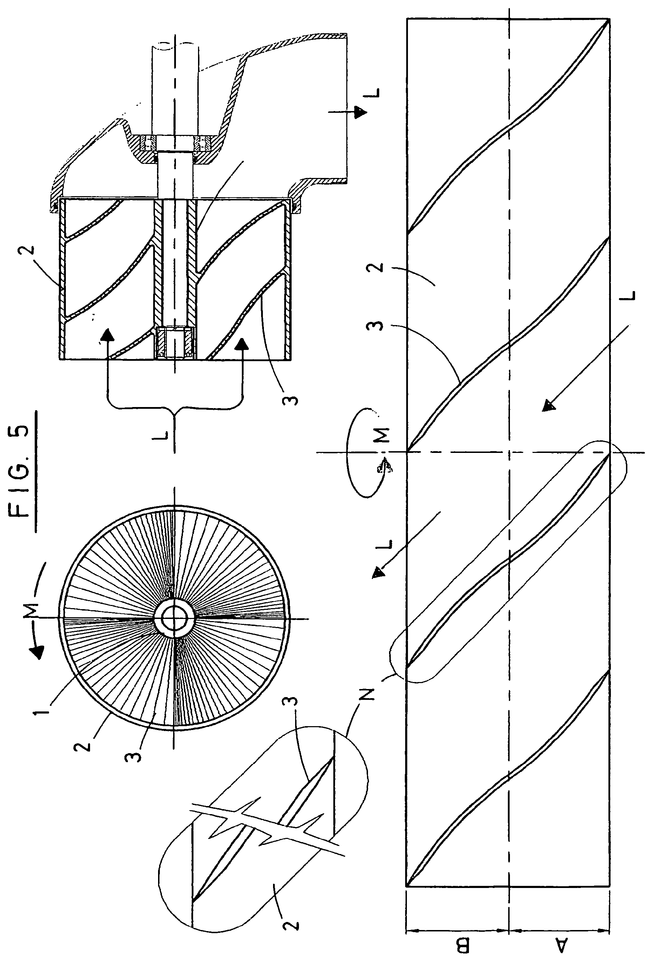

La figure 5 correspond au rotor utilisé comme pompe d'extraction où l'on peut apprécier une section de celui-ci, avec les accessoires propres de la pompe, comme par exemple l' axe accouplé avec roulement et carcasse de sortie incorporés. Ce dessin est complété avec une prise frontale du rotor et le développement du cylindre tubulaire, "L" étant la direction d'entrée du liquide et "M" le sens de rotation. (3) représente les pièces hélicoïdales, (1) le cube du rotor et (2) le cylindre tubulaire, tandis que "N" représente les pièces hélicoïdales (3) agrandies.

### DESCRIPTION D'UNE RÉALISATION PREFERENTIELLE

Le rotor de structure circulaire cellulaire trapézoïdale, adapté à diffèrents usages, et basé sur un fondement d'invention identique, dont nous pouvons décrire une réalisation préférentielle pour chacune de ses trois applications: premièrement comme rotor pour tout genre d'aéronefs et engins aériens, il est composé d'un noyau (1) comme centre du rotor avec deux ou plus cylindres tubulaires concentriquement installés (2), les pièces hélicoïdales se trouvant assemblées entre eux (3), et formant ainsi les trapèzes tubulaires hélicoïdaux ce qui lui confère la forme de structure circulaire cellulaire trapézoïdale. Le cylindre extérieur ayant le plus grand diamètre est prolongé par une pièce tubulaire en forme de tronc conique (4). Ces rotors seront de dimensions variables en dépendance de la puissance requise. Cet ensemble de pièces peut être assemblé selon les méthodes traditionnelles d'union comme par exemple soudés, vissés ou rivetés et les matériaux utilisés devront être métalliques.

Dans la construction des rotors pour moteurs "hors-bord" comme ceux employés pour pompes ou extracteurs, ayant des dimensions plus petites, des fontes ferriques ou des alliages de matériaux légers de grande résistance ou des plastiques revêtus peuvent être utilisés.

L'axe du moteur sera accouplé au cube ou noyau (1) selon les caractéristiques de celui-ci.

## Revendications

1. Rotor de structure circulaire cellulaire trapézoïdale qui dispose de plusieurs pièces hélicoïdales (3) **caractérisé en ce qu'**elles partent du noyau (1) et sont successivement accouplées sur un ou plusieurs cylindres tubulaires concentriques (2) jusqu'à former des trapèzes hélicoïdaux, lesquels une fois accouplés les uns sur les autres forment une structure circulaire cellulaire trapézoïdale, ces cylindres tubulaires concentriques (2) fermant totalement les périmètres extérieurs dans tous les cas où les pièces hélicoïdales sont incorporées (3).

2. Rotor de structure circulaire cellulaire trapézoïdale conformément à la revendication précédente, **caractérisé en ce que** les trapèzes hélicoïdaux (3) ont au moins trois cotés, et selon le nombre des cotés ceux-ci seront montés, alignés ou non-alignés entre les cylindres tubulaires concentriques qui suivent, (2) tandis que celui ayant le plus grand diamètre sera prolongée par une pièce tubulaire en forme de tronc conique(4).

3. Rotor de structure circulaire cellulaire trapézoïdale conformément à la première revendication, **caractérisé en ce que** le nombre de cylindres tubulaires concentriques (2) peut être unitaire, binaire ou multiple, tandis que le nombre de pièces hélicoïdales (3) doit être de quatre ou plus dans son plus petit diamètre, avec une progression variable dans les cylindres tubulaires concentriques suivants tandis que la surface totale des pièces hélicoïdales sera au moins deux fois plus grande que la totalité de la surface frontale du rotor.

4. Rotor de structure circulaire cellulaire trapézoïdale conformément aux revendications antérieures, le rotor est au moins 2% plus large que le diamètre extérieur du plus grand cylindre tubulaire concentrique (2).

## Claims

1. A rotor with a trapezoidal cellular circular structure having several helical parts (3), **characterized in that** they start from the nucleus (1) and are coupled on one or several concentric tubular cylinders (2) successively until forming helical trapezoids which, once coupled one on top of the other, form a trapezoidal cellular circular structure, which concentric tubular cylinders (2) completely close the outer perimeters whenever the helical parts (3) are incorporated.

2. The rotor with a trapezoidal cellular circular structure according to the preceding claim, **characterized in that** the helical trapezoids (3) have at least three sides and depending on the number of sides, they will be assembled, aligned or not, between the following concentric tubular cylinders (2), whereas the one with the largest diameter will extend by means of a frustoconical tubular part (4).

3. The rotor with a trapezoidal cellular circular structure according to claim 1, **characterized in that** it can have one, two or multiple concentric tubular cylinders (2), whereas it must have four or more helical parts (3) in its smallest diameter, with a variable progression in the following concentric tubular cylinders, whereas the total surface area of the helical parts will be at least two times larger than the total frontal surface area of the rotor.

4. The rotor with a trapezoidal cellular circular structure according to the preceding claims, **characterized in that** the rotor is at least 2% wider than the outer diameter of the largest concentric tubular cylinder (2).

## Patentansprüche

1. Rotor mit kreis-, zell- und trapezförmiger Struktur, der über mehrere schraubenförmige Teile (3) verfügt, **dadurch gekennzeichnet, dass** sie von dem Kern (1) ausgehen und nacheinander auf einen oder mehrere röhrenförmige, konzentrische Zylinder (2) gekoppelt werden, bis sie schraubenförmige Trapeze bilden, die, nachdem sie übereinander gekoppelt sind, eine kreis-, zell- und trapezförmige Struktur bilden, wobei die konzentrischen, röhrenförmigen Zylinder (2) die äußeren Umfänge immer dann vollständig schließen, wenn die schraubenförmigen Teile (3) eingebaut werden.

2. Rotor mit kreis-, zell- und trapezförmiger Struktur nach dem vorherigen Anspruch, **dadurch gekennzeichnet, dass** die schraubenförmigen Trapeze (3) zumindest drei Seiten haben, und dass diese nach der Anzahl der Seiten zwischen den folgenden konzentrischen, röhrenförmigen Zylindern (2) ausgerichtet oder nicht ausgerichtet montiert werden, während sich jener, der den größten Durchmesser hat, durch ein rohr- und kegelstumpfförmiges Teil (4) verlängert.

3. Rotor mit kreis-, zell- und trapezförmiger Struktur nach Anspruch 1, **dadurch gekennzeichnet, dass** die Anzahl an konzentrischen, röhrenförmigen Zylindern (2) einheitlich, binär oder vielfach sein kann, während die Anzahl an schraubenförmigen Teilen (3) vier oder mehr bei ihrem Mindestdurchmesser betragen muss, mit einem variablen Verlauf bei den folgenden konzentrischen, röhrenförmigen Zylindern, während die Gesamtfläche der schraubenförmigen Teile zumindest doppelt so groß wie die gesamte vordere Fläche des Rotors ist.

4. Rotor mit kreis-, zell- und trapezförmiger Struktur nach den vorherigen Ansprüchen, **dadurch gekennzeichnet, dass** der Rotor zumindest 2% breiter als der äußere Durchmesser des größten konzentrischen, röhrenförmigen Zylinders (2) ist.
